# EUROPEAN PATENT APPLICATION

(11) **EP 1 439 135 A1**
(43) Date of publication of application: **21.07.2004**
(21) Application number: 02762801.5
(22) Date of filing: 19.08.2002
(51) Int. Cl.: B65D 90/04, B32B 15/08

(54) **CHEMICAL RESISTANT SHEET LINED TANK**

(30) Priority: 22.08.2001 JP 2001251860
(71) Applicant: Sumitomo Chemical Company, Limited, Chuo-ku Osaka 541-8550 (JP)
(72) Inventor: SONE, Yoshio, Zama-shi, Kanagawa 228-0014 (JP); WATANABE, Seiji, Ampachi-gun, Gifu 503-0125 (JP)
(74) Representative: VOSSIUS & PARTNER
(86) International application number: PCT/JP2002/008339
(87) International publication number: WO 2003/018439

(57) **Abstract**

The present invention provides a tank, for storing chemicals, lined with chemical-resistant lining sheet at the interior surface of its metallic tank body. The tank of the present invention comprises an outer sheet with which the metallic tank body is lined at the interior surface, an inner sheet laid inside the outer sheet, and spacers disposed between the outer sheet and the inner sheet to keep a space communicating with outside of the tank. The tank of the present invention is suitably used to store chemicals which permeate the lining sheet even though the sheet itself has no defect, depending on the type of the chemicals stored or the working conditions of the tank, for example, chemicals having high permeability to corrode metals. Thus, the chemical in the tank can be protected from metal contamination, and the damage of the tank body can be prevented.

## Description

### Technical Field

The present invention relates to tanks lined with chemical-resistant lining sheets, and in particular to tanks lined with chemical-resistant lining sheets for use in storing or reacting various kinds of chemicals (e.g., chemical liquids), especially chemicals having high infiltratability or permeability.

### Background Art

In general, tanks for the use in handling corrosive liquids such as various chemicals or solvents, particularly metallic tanks are lined at their whole interior walls with lining sheets of chemical-resistant materials such as polyvinyl chloride, rubber, polytetrafluoroethylene (or PTFE), i.e., one of fluororesins, or the like so as to prevent the corrosion of the interior walls of the tanks due to such chemical liquids, or the contamination of the chemical liquids due to such corrosion, or the leakage of the chemical liquids from the tanks due to the damage of the tanks caused by such corrosion. Among these tanks, the chemical-storage tanks lined with the sheets of fluororesins are widely used, the fluororesins having far more excellent properties than other synthetic resins, particularly in view of heat resistance, chemical resistance, non-stickness, purity, etc.

However, in what is so called "adhesion lining" wherein the joint portions of the sheets are welded, pinholes or the like tend to occur on the welded portions of the sheets due to the aged deterioration thereof. The chemical liquid in the tank, therefore, comes into contact with the metallic tank body via such pinholes to react with the metal body of the tank, or the chemical liquid is contaminated by dirt on the metallic surface of the tank. As a result, the chemical liquid in the tank is contaminated, and it damages the metallic tank body in the worst case.

Even if tanks are lined with sheet materials, some of chemicals permeate the lining sheets on the metallic tank bodies, depending on the types of the chemicals stored in the tanks (e.g., chemicals which have high permeability to corrode metals) and the working conditions of the tanks.

To overcome this problem, Japanese Laid-Open Patent Publication No. 8-80996 proposes a chemical-storage tank for semiconductors which is lined with two layers of lining sheets: that is, the tank is lined with a fluororesin sheet which is to be contact with a chemical liquid, and the tank is further lined with a general resin lining material other than the fluororesin, at the reverse side of the fluororesin sheet.

According to the chemical-storage tank of this publication, even if pinholes or cracks occur on the fluororesin lining sheet so that the chemical permeates the sheet through such defective portions, there the general resin lining material as the second layer is presented, and this intermediate layer (2nd layer) receives the leaking chemical liquid. Thanks to this, the direct contact of the chemical liquid with the metallic tank body is prevented, and the tank is protected from pollution or damage due to the chemical.

However, the chemical resistance of the general resin lining material used as the intermediate layer is lower than that of the fluororesin lining sheet material.

This follows that, even if the lining structure of two layers (which is very much like a structure having the lining sheet with a merely increased thickness) as described in Japanese Laid-Open Patent Publication No. 8-80996 is provided, the chemical liquid having high permeability would corrode the metal body of the tank so that the chemical liquid is contaminated and the metallic tank body is damaged. This is because, once the fluororesin lining sheet as the first layer has permitted the permeation by the chemical liquid having high permeability enough to corrode metals, the permeating chemical liquid is always kept in contact with the intermediate layer, i.e., the general resin lining material which dissolves more easily than the fluororesin lining sheet, and consequently, the chemical liquid in the tank permeates the two layers of the lining sheets and corrodes the metallic surface of the tank. As a result, the chemical liquid is contaminated by the metal, and the metallic tank body is damaged.

In another case where a chemical-storage tank is lined with two fluororesin lining sheets (namely, further fluororesin sheet is used instead of the general resin lining material in the above two-layer lining structure), it merely takes longer time for the chemical liquid to permeate the lining sheets after the chemical liquid is put in the tank, because the thickness of the lining sheet is merely increased.

In other words, the chemical liquid which has leaked through the first fluororesin lining sheet is always in contact with the second fluororesin lining sheet, which results in the permeation of the chemical liquid through the two lining sheets, followed by the corrosion of the metallic surface of the tank.

### Disclosure of Invention

### (Technical Problems to be solved by the Invention)

The present invention is developed to overcome the foregoing problems which the prior art confronts, and it is therefore an object of the present invention to provide a chemical-storage tank, which does not suffer from the corrosion of the metallic body composing the outer walls of the tank, even if metal-corrosive chemicals (e.g., chemical liquids) are stored.

Another object of the present invention is to provide a tank with which the chemical in the tank can be protected from metal contamination, and the damage of the tank body can be prevented, even if the chemicals stored in the tank are chemicals that can permeate the lining sheet having no defect, depending on the type of the chemicals stored or the working conditions of the tank, for example, chemicals having high permeability to corrode metals.

### (Solution of the Problems)

According to the present invention, there is provided a tank lined with chemical-resistant lining sheet at the interior surface of its metallic tank body, characterized in that the tank comprises:
an outer sheet with which the metallic tank body is lined at the interior surface,
an inner sheet laid inside the outer sheet, and
spacers disposed between the outer sheet and the inner sheet to keep a space communicating with outside of the tank.

In the present invention, it is preferable that the tank is provided with a suction mechanism which causes the chemical leaking from the tank through the inner sheet to be discharged through the space kept by the spacer, so as to efficiently discharge the leaking chemical by permeation. More preferably, the spacers are in the shape of a cylinder, bar or sphere, and are so disposed as to make it possible to discharge the chemical, which was leaking from the tank through the inner sheet by permeation.

As mentioned above, the tank is lined with two chemical-resistant lining sheets at the interior surface of its metallic tank body, and a space is kept between the inner sheet and the outer sheet. Thanks to this, the metallic tank body can be protected by the outer sheet, even when the chemical leaks trough the inner sheet because the chemical stored in the tank has high permeability to permeate the inner sheet even if the inner sheet itself has no defect such as pinholes. Further, the metallic tank body can be protected from the corrosion due to the leaking chemical, since the space between the inner sheet and the outer sheet is communicated with the outside of the tank, thereby to prevent the leaking chemical from remaining in the space and to discharge the same to the outside of the tank.

By providing the space between the inner sheet and the outer sheet, the number of the opportunities where the chemical leaking through the inner sheet comes into contact with the outer sheet can be decreased, so that the deterioration of the outer sheet can be retarded. Thus, the corrosion of the metallic tank body due to the leaking chemical and the metal contamination of the chemical in the tank along with such corrosion can be prevented.

In addition, the spacers make it possible to hold the space (or clearance) between the outer sheet and the inner sheet against the pressure of the chemical which is stored in the tank, so that the outer sheet does not come into direct contact with the inner sheet. Therefore, even if the chemical in the tank which has high permeability to corrode metals leaks through the inner sheet, the chemical immediately flows down in the above space and exits from the tank, and thus never subsequently permeates the outer sheet. As a result, the corrosion of the metallic tank body can be prevented.

### (Effect of the Invention superior to Prior Arts)

According to the present invention, there is provided a chemical-storage tank capable of protecting its metallic tank body from corrosion due to metal-corrosive chemicals. Further, there is provided a tank suitably used to store chemicals which permeate the lining sheet even though the sheet itself has no defect, depending on the type of the chemicals stored or the working conditions of the tank, for example, chemicals having high permeability to corrode metals. Thus, the chemical in the tank can be protected from metal contamination, and the damage of the tank body can be prevented.

### Brief Description of Drawings

Fig. 1 is a longitudinal sectional view of the body of a tank lined with a chemical resistant lining sheet, illustrating the first embodiment of the present invention.
Fig. 2 is a cross-sectional view of the tank body shown in Fig. 1, taken along the line X-X.
Fig. 3 is a longitudinal sectional view of a lid (or a bottom) to be combined with the tank body shown in Fig. 1.

### Best Mode for Carrying out the Invention

Hereinafter, a tank lined with a chemical-resistant lining sheet according to the present invention will be explained, with reference to the embodiment thereof shown in the accompanying drawings.

In one of preferred modes of the embodiment, the tank lined with a chemical-resistant lining sheet according to the present invention (hereinafter simply referred to as "tank") comprises a tank body and a lid for sealing one of the end portions of the tank body (or a bottom for sealing the other end portion thereof).

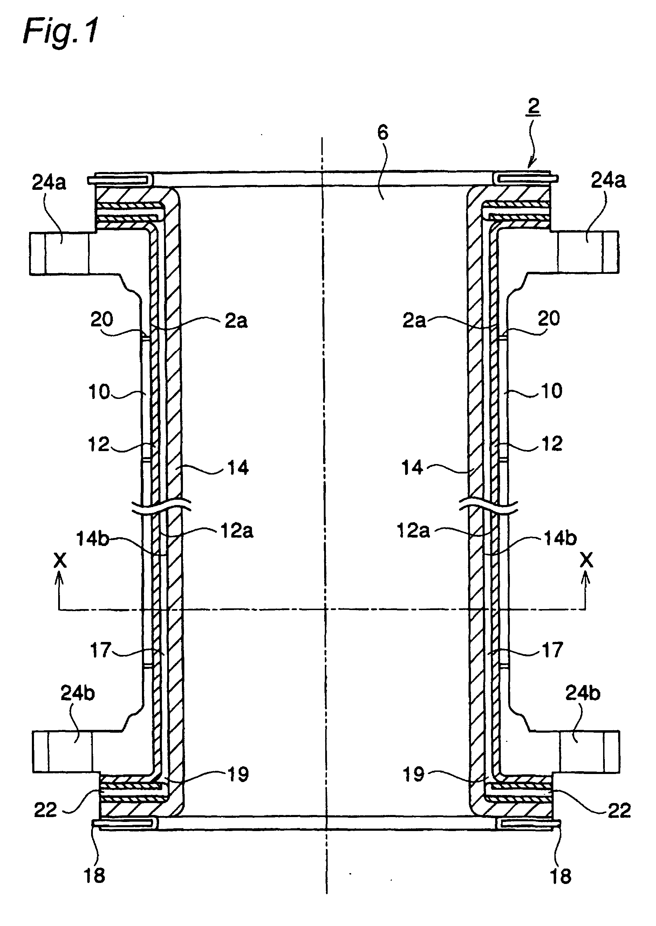

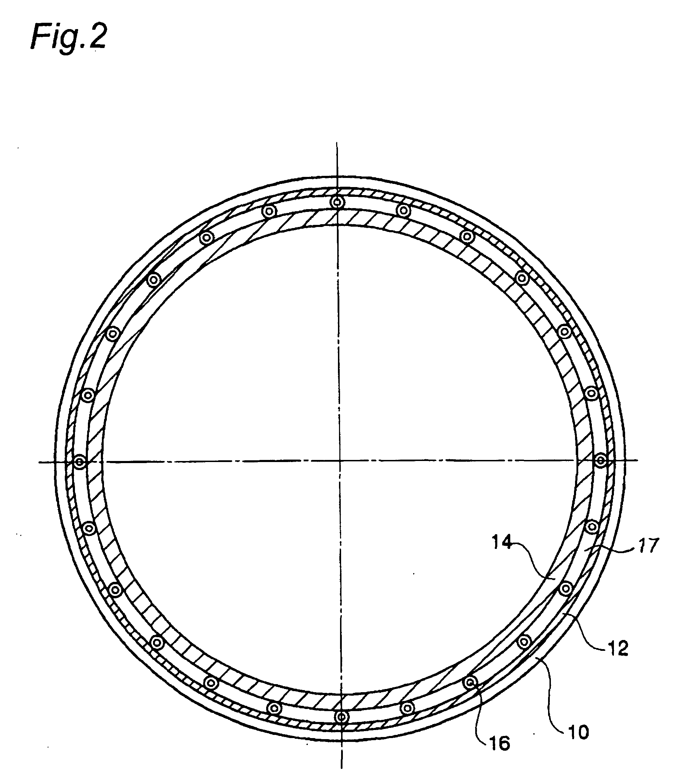

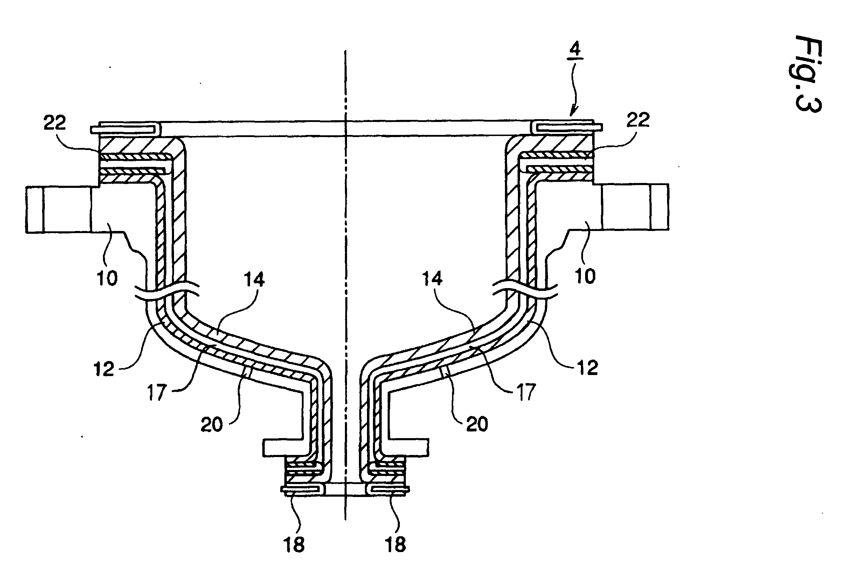

Fig. 1 shows one embodiment of the present invention, illustrating the longitudinal sectional view of the cylindrical body of the tank lined with the chemical-resistant lining sheet. Fig. 2 shows the cross-sectional view of the tank body shown in Fig. 1, taken along the line X-X. Fig. 3 shows the longitudinal sectional view of the lid (or the bottom) to be combined with the tank body shown in Fig. 1. The tank body can be joined and connected to another tank body with the openings 6 of the tank bodies confronted to each other. Thus, it is possible to connect a plurality of such tank bodies with one another to provide a single elongated tank lined with chemical-resistant lining sheets.

### <Structure of Lining>

The tank body 2 shown in Figs. 1 and 2 comprises a metallic cylindrical body 10 and a two-layer lining consisting of two chemical-resistant sheets with which the metallic cylindrical body 10 is lined.

This two-layer lining structure comprises an outer sheet 12 which is applied to the interior surface 2a of the metallic cylindrical body 10, an inner sheet 14 which is laid inside the outer sheet 12, and spacers 16 which are disposed between the outer sheet 12 and the inner sheet 14 so as to keep a predetermined distance therebetween, and which hold a space 17 communicating with the outside of the tank body 2.

The outer sheet 12 is applied to the interior surface 2a of the metallic cylindrical body 10, and the inner sheet 14 is laid inside the outer sheet 12 with the spacers 16 sandwiched therebetween. As materials for the outer sheet 12 and the inner sheet 14, fluororesins can be used.

Typical examples of the materials for the outer sheet 12 and the inner sheet 14 include PTFE (polytetrafluoroethylene resins) and PFA (tetrafluoroethylene-perfluoroalkylvinylether copolymer resins). As the outer sheet 12 and the inner sheet 14, there can be used not only PTFE sheets and PFA sheets, but also the surface-treated sheets of PTFE or PFA (particularly at their one side surfaces), such as the sheets over which glass cloth is heat-fused, the sheets which are surface-roughened with a metallic sodium solution so as to improve the adhesive nature, the sheets over which carbon cloth is heat-fused, and the like.

The outer sheet 12 and the inner sheet 14 may be formed from the same material or different materials. Otherwise, one sheet may be formed from a plurality of different materials.

There is no particular limit in selection of the thickness of the outer sheet 12, since such thickness changes depending on the end use or the application scale of the tank, the kind of a chemical to be stored therein, etc. For example, the thickness of the outer sheet is 1 to 6 mm, preferably 2 to 4 mm. Likewise, there is no particular limit in selection of the thickness of the inner sheet 14, and for example it is 2 to 6 mm, preferably 2 to 4 mm.

### Spacer

There is no particular limit in selection of the shape or material of the spacer 16, as far as the spacer 16 can keep the space 17 between the outer sheet 12 and the inner sheet 14, and can withstand the actions of the chemical stored in the tank.

For example, the spacer 16 may be formed from the same material as that of the outer sheet 12 and the inner sheet 14, i.e., fluororesins, preferably PTFE or PFA.

Such the spacer 16 formed from fluororesin is not easily dissolved by the chemical liquid which permeates the inner sheet 14 from the interior of the tank and leaks to the reverse side 14b of the inner sheet 14. Further, since the spacer 16 is disposed between the outer sheet 12 and the inner sheet 14, the space 17 can be kept therebetween under the pressure of the chemical stored in the tank.

Further, the insertion of the spacer 16 is effective to prevent the direct contact between the outer sheet 12 and the inner sheet 14 so that the chemical liquid permeating the inner sheet 14 can flow down through the space 17 and exit. Thus, it becomes possible to prevent the chemical liquid from subsequently permeating the outer sheet 12. Further, since the metallic cylindrical body 10 is covered with the outer sheet 12, the metallic cylindrical body 10 can be protected from corrosion with the leaking chemical liquid.

The spacer 16 is welded or bonded with adhesive between the outer sheet 12 and the inner sheet 14. In this case, it is sufficient for the spacer 16 to be fixed at least on the outer sheet 12, or otherwise, the spacer 16 may be fixed on both of the outer sheet 12 and the inner sheet 14.

There is no particular limit in selection of the shape of the spacer 16, and it may be in the shape of, for example, a cylinder (see Fig. 2), bar (round or prismatic section), sphere, net or the like.

The spacer 16 is disposed, such that the chemical liquid permeating into the space 17 can flow down to outside without being stopped by the spacer 16. For example, in the case of the spacer 16 of a relatively long cylinder or bar, a plurality of such spacers 16 may be vertically disposed in parallel with each other at predetermined intervals along the longitudinal direction of the tank (see Fig. 2), or may be horizontally disposed in parallel with each other along the radial direction of the tank (the direction orthogonal to the longitudinal direction of the tank) (not shown). In the latter case, each spacer 16 may have chasms, so as to allow the chemical liquid to flow therethrough down to outside (not shown).

In the case that the tank body 2 is supported with its longitudinal direction (or its axial direction) aligned vertically to the ground, it is preferable that the relatively long spacers 16 are vertically disposed in parallel to one another at predetermined intervals along the longitudinal direction of the tank body 2 as shown in Fig. 2, so as to allow the chemical liquid or the like to flow down, so that the down-flowing of the chemical liquid or the like can becomes smooth.

For example, such relatively long and cylindrical spacers 16 can be disposed at intervals of 10 to 100 mm as shown in Fig. 2. Note that the length of the spacers 16 depends on the height of the metallic tank body, and the outer diameter of the cylindrical shape is 3 mm and inner diameter of the cylindrical shape is 1 mm, for example.

In another case where spherical spacers 16 are used, the number of such spacers 16 to be disposed at predetermined intervals are appropriately selected in. accordance with the size of a tank to be lined with a chemical-resistant lining sheet. For example, the selected number of spherical spacers 16 are disposed so that a space 19 large enough to allow the chemical leaking through the inner sheet 14 to be discharged from the tank can be ensured at the end portion of the tank body 2, and so that substantially no unevenness is caused on the surface of the inner sheet 14. To achieve the above conditions, for example, the spherical spacers 16 are disposed one by one at substantially regular intervals within the space 17 so as not to allow the adjacent spacers 16 to contact with each other, while the space between the inner sheet 14 and the outer sheet 12 is being kept at such a distance that corresponds to one or more spacers, preferably one spacer.

In any case, the shape of the spacers 16 and the way of disposing them can be selected so that the space 17 can be ensured, which is enough to discharge the chemical leaking through the inner sheet 14.

### Air-Passing Ring

In the embodiment shown in Figs. 1 to 3, air-passing rings 22, 22 which allow the space 17 to communicate with outside of the tank are provided at the upper end portion and the lower end portion of the metallic cylindrical body 10. The air-passing ring 22 at the lower end portion of the tank is used to discharge the chemical, which leaks through the inner sheet 14 to the spacer side, to the outside of the tank. In this regard, it is preferable to provide a suction mechanism (not shown) which forcedly discharges the leaking chemical to the outside of the tank.

In view of chemical resistance, it is preferable to use an air-passing ring which is made of stainless steel or other metal alloy and of which surface is coated with the same material as that for the outer sheet 12 and the inner sheet 14, preferably PTFE, or an air-passing ring which is made of PTFE mixed with a filler (selected in accordance with type of a chemical to be stored). According to the present invention, in view of creep resistance, it is preferable to use an air-passing ring made of PTFE mixed with a filler.

As is understood from the above description, the space 17 is so formed as to discharge the chemical leaking to the outside of the tank, when there happens the leaking of the chemical stored in the tank trough the inner sheet, even though the inner sheet 14 itself has no pinhole or crack.

By providing this space 17, the number of opportunities where the chemical leaking through the inner sheet 14 contacts the outer sheet 12 can be decreased, which prevents the deterioration of the outer sheet 12. Thus, the corrosion of the metallic cylindrical tank body 10 due to the leaking chemical, and the contamination of the chemical stored in the tank, caused by such corrosion, can be prevented.

Further, the suction mechanism forcedly discharges the air in the space 17 to thereby quickly discharge the chemical leaking through the inner sheet 14, to the outside of the tank.

The foregoing description has been made mainly on the tank body 2 and its interior wall structure. But, according to the present invention, it is also preferable to line the lid (or the bottom) 4 for closing the tank body 2 with two layers of chemical-resistant sheets, like as the tank body 2, as shown in Fig. 3. Preferably, the lid (or the bottom) is formed of the same metal material as that for the metallic cylindrical body 10 of the tank body 2, and is lined at its interior surface with a first fluororesin sheet as an outer sheet 12, and further with a second fluororesin sheet as an inner sheet 14, with spacers 16 sandwiched therebetween.

### <Production of a tank provided with the lining structure>

The tank provided with the lining structure shown in Figs. 1 to 3 may be produced as follows.

### Application of Outer Sheet

The outer sheet 12 can be applied on the interior wall of the metallic cylindrical body 10 according to a conventional method. For example, a plurality of sheet materials are joined in advance at outside of the tank so as to conform the interior surface configuration of the metallic cylindrical body 10, and the resultant outer sheet 12 is taken into the tank and laid on the intended position on the interior wall of the tank and bonded thereto with adhesive. Otherwise, the sheet materials are successively joined to one another by welding or bonding within the metallic cylindrical body 10, and simultaneously, are bonded to the interior surface 2a of the metallic cylindrical body 10 (on-the-spot application). A PFA bar or the like can be used for welding, and rubber type or epoxy type adhesive can be used as the adhesive.

In general, the lining methods are classified into the "adhesion lining" method in which sheets are secured on a tank body with adhesive, and the "loose lining" method in which a tank body is lined with sheets without adhesive. In the case where the outer sheet 12 is applied to the interior surface of the metallic cylindrical body by the "loose lining" method, the outer sheet 12 is sucked onto the interior surface of the metallic cylindrical body 10 through vents 20 formed thereon so as to attach the outer sheet 12 to the metallic cylindrical body 10.

### Application of Spacer

Then, on the inner surface 12a of the outer sheet 12 (the surface at the chemical side) applied as above, the spacers 16 are set at predetermined intervals.

In this step, the spacers 16 are so disposed that the chemical leaking from the inside of the tank through the inner sheet 14 can flow down and exit to the outside of the tank.

For example, as shown in Fig. 2, the cylindrical spacers 16 are disposed at predetermined intervals along the longitudinal direction of the metallic cylindrical body 10, which is supported upright.

To set the spacers 16 on the inner surface 12a of the outer sheet 12, the spacers 16 may be previously bonded on the surface of the outer sheet 12 by welding or using adhesive at the outside of the tank, or otherwise, the spacers 16 may be set on the surface 12a at the chemical side of the outer sheet 12 in the same manner as above, after the outer sheet 12 has been applied to the interior surface 2a of the metallic cylindrical body 10.

The application of the outer sheet 12 and the spacers 16 onto the interior surface of the metallic cylindrical body 10 can be done within the tank. That is, a plurality of "partial sheet" in each of which the spacers 16 are bonded on the outer sheet 12 are previously prepared, and then, such the "partial sheets" are carried into the metallic cylindrical body 10. Then, workers on-the-spot apply the "partial sheets" on the interior surface of the metallic cylindrical body 10 within the metallic cylindrical body 10. Specifically, each of the "partial sheets" is bonded onto the interior surface of the metallic cylindrical body 10 at its outer sheet 12, and simultaneously is joined to other "partial sheet" at their end portions.

### Application of Inner sheet

In this embodiment, the inner sheet 14 is then applied on the spacers 16. In this regard, the inner sheet 14 can be laid with a predetermined space away from the outer sheet 12, before the spacers 16 are bonded onto the outer sheet 12.

The outer sheet 12 and the inner sheet 14 can be so applied as shown in Fig. 1, wherein both the sheets are applied not only on the side wall 2a at the chemical side of the tank body 2 (or the metallic cylindrical body 10), but also on the upper flange 24a and the lower flange 24b of the tank body 2. For example, the outer sheet 12 and the inner sheet 14 are stretched so as to extend along the shapes of the flanges 24 of the metallic cylindrical body 10, respectively, in order to protect the surfaces of the flanges 24 from corrosion and pollution due to the chemical or the like.

One embodiment of the present invention has been fully described as above. However, the scope of the present invention is not limited to this embodiment in any way, and the alterations and modifications thereof are possible to an extent that they are not beyond the objects, actions and effects of the present invention.

Examples of the chemicals to be stored in the tank of the present invention include gases such as a hydrogen chloride gas, chlorine gas, etc., aqueous solutions thereof and mixtures thereof.

A remarkable effect is confirmed when the tank of the present invention is used in contact with a chemical of high temperature (e.g., 100°C or higher).

For example, the tank of the present invention can be used as a distillation tank which is intended for producing a hydrogen chloride gas by distilling hydrochloric acid (or an aqueous solution of hydrogen chloride) of high temperature (for example, 100°C or higher), or as an absorption tank which is intended for causing water to absorb a hydrogen chloride gas (which may contain chlorine) of high temperature (for example, 100°C or higher) so as to obtain hydrochloric acid, and simultaneously storing the resultant hydrochloric acid.

## Claims

1. A tank lined with chemical-resistant lining sheet at the interior surface of its metallic tank body, **characterized in that** the tank comprises:
an outer sheet with which the metallic tank body is lined at the interior surface,
an inner sheet laid inside the outer sheet, and
spacers disposed between the outer sheet and the inner sheet to keep a space communicating with outside of the tank.

2. The tank according to claim 1, wherein a suction mechanism is provided to cause a chemical leaking from the inside of the tank through the inner sheet to be discharged through the space kept by the spacer.

3. The tank according to claim 1 or 2, wherein the spacers are in the shape of a cylinder, bar or sphere, and are disposed so that the chemical leaking from the inside of the tank through the inner sheet can be discharged.
